# EUROPEAN PATENT SPECIFICATION

(11) **EP 4 325 766 B1**
(45) Date of publication and mention of the grant of the patent: **05.11.2025**
(21) Application number: 21947448.3
(22) Date of filing: 29.06.2021
(51) Int. Cl.: H04L 9/00, H05B 47/18, H04L 9/06, B60Q 9/00

(54) **DATA TRANSMISSION METHOD AND COMMUNICATION APPARATUS**
DATENÜBERTRAGUNGSVERFAHREN UND KOMMUNIKATIONSVORRICHTUNG
PROCÉDÉ DE TRANSMISSION DE DONNÉES ET APPAREIL DE COMMUNICATION

(43) Date of publication of application: 21.02.2024
(73) Proprietor: Shenzhen Yinwang Intelligent Technologies Co., Ltd., Shenzhen, Guangdong 518129 (CN)
(72) Inventor: WANG, Quanwu, Shenzhen, Guangdong 518129 (CN); ZHAO, Linhui, Harbin, Heilongjiang 150080 (CN)
(74) Representative: Pfenning, Meinig & Partner mbB
(86) International application number: PCT/CN2021/103106
(87) International publication number: WO 2023/272488

(56) References cited:
- CN-A- 102 624 515
- CN-A- 102 624 515
- CN-A- 112 688 845
- CN-A- 112 688 845
- US-A- 6 038 321

## Description

### TECHNICAL FIELD

This disclosure generally relates to the field of automotive electronics, and the invention more specifically relates to a data transmission method, a communication apparatus, a computer readable storage medium, and a computer program product.

### BACKGROUND

In recent years, digital biometric recognition technologies such as facial recognition and fingerprint recognition are widely applied to scenarios such as unlocking and payment of mobile terminals such as mobile phones, and advantages of convenience and security of the digital biometric recognition technologies are recognized by most people.

Technologies such as Bluetooth and near field communication (near field communication, NFC) are gradually becoming mature, and the technologies are also widely applied to unlocking digital devices.

With respect to this aspect, development of automotive electronics lags behind that in the mobile communication field. Currently, most vehicles are still unlocked by using conventional radio frequency keys or even mechanical keys.

When the digital biometric recognition technologies such as facial recognition and fingerprint recognition are applied to the field of automotive electronics, how to ensure data security between a module such as a fingerprint recognition module and a vehicle is an urgent problem that needs to be resolved currently.

CN 112688845 A discloses a vehicle-mounted CAN network communication method and device. The vehicle-mounted CAN network communication method is applied to a sender, and the method comprises the steps of obtaining a first secret key and a current fresh value of a vehicle-mounted CAN network, splicing the first secret key and the fresh value to obtain a splicing result; determining a second secret key based on the splicing result and the data length of the CAN data to be sent; and encrypting the CAN data to be sent by using the second key. According to the method and the device, the message data of the CAN bus can be encrypted under the condition that the load of the CAN bus is not increased, the data privacy of the CAN bus of the vehicle is protected, and the communication performance of the CAN bus is ensured.

US 6 038 321 A discloses receiving by a device a first array, wherein the first array comprises at least one natural random number. A transmitter device is configured to encrypt variable-length data having a data length corresponding to a kind of information to be transferred or to a communication capacity, using the natural random number, to produce a variable-length random number sequence. Then, the transmitter device performs an exclusive OR operation per bit between the variable-length random number sequence and the information to produce transfer information, and transmits the transfer information to a receiver device. The transmitter device further transmits the variable-length data and the natural random number in an encrypted manner to the receiver device. The receiver device reproduces the variable-length data and the natural random number transmitted in the encrypted manner, and then encrypts the variable-length data using the natural random number to produce a variable-length random number sequence which is identical with the foregoing variable-length random number sequence produced at the transmitter device. Then, the receiver device performs an exclusive OR operation per bit between the thus produced variable-length random number sequence and the received transfer information to reproduce the original information.

CN 102 624 515 A discloses a data transmission method and system, which is used for improving security of data transmission in a CAN (controller area network)-Bus communication. The method/ system also includes generating a check code to be verified by a receiving terminal device.

### SUMMARY

The object of the present invention is to provides a data transmission method, a communication apparatus, a computer readable storage medium, and a computer program product to ensure data security between a recognition module such as a fingerprint recognition module and a vehicle, to resolve a real-time problem of data during encrypted transmission effectively , and to resist replay and forgery attacks effectively, to enhance anti-theft performance of the vehicle. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect, where the first aspect and all its implementations below are not claimed, a data transmission method is provided, and includes: A first device determines a first array, where the first array includes at least one random number; the first device determines first data based on the first array, where the first data belongs to first memory data; the first device determines third data based on an exclusive OR operation on the first memory data and second data, where the second data is to-be-transmitted data; the first device determines a first check code based on a remaining data length of the first memory data, a length of the second data, and the third data, where the first check code is used to check whether the third data is correct; and the first device sends the remaining data length of the first memory data, the data length of the second data, the third data, and the first check code to a second device.

It should be understood that the remaining data length of the first memory data and the data length of the second data may be understood as indication information, and the indication information indicates data length information of the first memory data and data length information of the second data. In other words, the data length of the first memory data or the data length of the second data may be understood as a value, and the value indicates the remaining data length of the first memory data or the data length of the second data.

Here, a two-step encryption procedure in which pre-encryption and exclusive OR operation encryption are combined is used, so that an exclusive OR encryption procedure can be independent of a data generation procedure (a pre-encryption procedure). In this way, in an idle time period, sufficient data can be pre-encrypted and stored in the first device for use, so that exclusive OR encryption is performed by using unique data each time a transmission task is executed. Security of this data encryption method is the same as that of direct encryption. In addition, there is only the exclusive OR operation in a transmission procedure in the method, and therefore data can be quickly encrypted and sent to ensure real-time data transmission. According to the technical solution, in this application, data can be quickly and effectively encrypted, security performance of CAN bus communication can be improved, anti-theft performance of an entire vehicle can be enhanced, and a high real-time transmission requirement of the vehicle can be further met.

With reference to the first aspect, in some implementations of the first aspect, the data length of the first memory data is greater than or equal to the data length of the second data.

Here, before exclusive OR encryption is performed on the first memory data and the second data, it can be ensured that the data length of the first memory data is greater than the data length of the second data. In this way, the anti-theft performance of the vehicle can be enhanced, data security between the vehicle and a recognition module can be enhanced, and data communication efficiency can be further enhanced.

With reference to the first aspect, in some implementations of the first aspect, the first memory data includes second memory data and the first data, and before the first device determines the first array, the method further includes: The first device determines that a data length of the second memory data is less than a threshold.

Here, when the data length of the second memory data of the first device is less than a specific threshold, the first device can immediately supplement the data length of the memory data of the first device, so that sufficient data can be pre-encrypted, to meet a real-time data transmission requirement.

With reference to the first aspect, in some implementations of the first aspect, after the first device determines the first array, the method further includes: The first device sends a pre-encryption command to the second device, where the pre-encryption command indicates the second device to perform a pre-encryption procedure, and the pre-encryption command includes the first array and the data length of the second memory data.

Here, the first device and the second device can simultaneously start pre-encryption procedures. In this way, the first device and the second device can keep synchronous in the encryption procedure, to enhance communication security and data security between the first device and the second device.

With reference to the first aspect, in some further not claimed implementations of the first aspect, the method further includes: The first device receives first indication information from the second device, where the first indication information indicates whether the second device completes the pre-encryption procedure.

Here, the second device can send, to the first device, indication information indicating that the pre-encryption procedure is completed, so that communication efficiency between the first device and the second device can be enhanced, to help the first device perform a subsequent procedure or method, and further enhance communication security between the first device and the second device.

With reference to the first aspect, in some implementations of the first aspect, the method further includes although not claimed: The first device receives second indication information from the second device, where the second indication information indicates whether the second device correctly receives the second data.

Here, the second device can send, to the first device, indication information indicating that plaintext is correctly received, to enhance communication efficiency between the first device and the second device.

According to a second aspect according the invention, another data transmission method is provided, and includes: A second device receives a pre-encryption command from a first device, where the pre-encryption command indicates the second device to perform a pre-encryption procedure, the pre-encryption command includes a first array and a data length of second memory data of the first device, and the first array includes at least one random number; the second device determines first data based on the first array, where the first data belongs to third memory data; and the second device sends first indication information to the first device, where the first indication information indicates whether the second device completes the pre-encryption procedure.

According to the technical solution according to the invention, a two-step encryption procedure in which pre-encryption and exclusive OR operation encryption are combined is used, so that an exclusive OR encryption procedure can be independent of a data generation procedure (a pre-encryption procedure). In this way, in an idle time period, sufficient data can be pre-encrypted and stored in the first device for use, so that exclusive OR encryption is performed by using unique data each time a transmission task is executed. Security of this data encryption method is the same as that of direct encryption. In addition, there is only the exclusive OR operation in a transmission procedure in the method, and therefore data can be quickly encrypted and sent to ensure real-time data transmission. According to the technical solution, in this application, data can be quickly and effectively encrypted, security performance of CAN bus communication can be improved, anti-theft performance of an entire vehicle can be enhanced, and a high real-time transmission requirement of the vehicle can be further met.

With reference to the second aspect, the third memory data includes fourth memory data and the first data, and before the second device determines the first data based on the first array, the method further includes: The second device determines that a data length of the fourth memory data of the second device is the same as the data length of the second memory data.

According to this technical solution, it can be ensured that pre-encryption procedures respectively started by the first device and the second device are correct. In addition, an objective of data check can be further achieved, and a capability of resisting a replay attack can be enhanced, to enhance the anti-theft performance of the vehicle.

With reference to the second aspect, in some implementations of the second aspect, the method further includes: The second device receives a remaining data length of first memory data, a data length of second data, third data, and a first check code from the first device, where the second data is to-be-transmitted data, and the first check code is used to check whether the third data is correct; the second device determines a second check code based on the remaining data length of the first memory data, the data length of the second data, and the third data; the second device checks the first check code and the second check code; and if the first check code is the same as the second check code, the second device determines a relationship between a data length of the third memory data and the data length of the second memory data; or if the first check code is different from the second check code, the second device feeds back a check failure to the first device.

According to this technical solution, after receiving the remaining data length of the first memory data, the data length of the second data, and the third data that are sent by the first device, the second device can determine the second check code based on the data, to check whether the data received by the second device is tampered with or interfered with. Therefore, communication security and data security between the first device and the second device can be enhanced, and an identity of the first device can be verified, to enhance the anti-theft performance of the vehicle.

With reference to the second aspect, in some not claimed implementations of the second aspect, the method further includes: If a difference between the data length of the third memory data and the data length of the second memory data is the same as the data length of the second data, the second device determines the second data based on an exclusive OR operation on the third memory data and the third data; or if a difference between the data length of the third memory data and the data length of the second memory data is different from the data length of the second data, the second device re-performs the pre-encryption procedure.

Here, it can be ensured that an encryption and decryption communication procedure is correct, and a replay attack can be prevented, to enhance the anti-theft performance of the vehicle.

With reference to the second aspect, in some not claimed implementations of the second aspect, the method further includes: The second device sends second indication information to the first device, where the second indication information indicates whether the second device correctly receives the second data.

Here, the second device can send, to the first device, indication information indicating that plaintext is correctly received, to enhance communication efficiency between the first device and the second device.

According to a third aspect, where the third aspect and its implementations and options below are not claimed, another communication apparatus is provided, and includes: a processing unit, configured to determine a first array, where the first array includes at least one random number, where the processing unit is further configured to determine first data based on the first array, where the first data belongs to first memory data; the processing unit is further configured to determine third data based on an exclusive OR operation on the first memory data and second data, where the second data is to-be-transmitted data; and the processing unit is further configured to determine a first check code based on a remaining data length of the first memory data, a data length of the second data, and the third data, where the first check code is used to check whether the third data is correct; and a transceiver unit, configured to send the remaining data length of the first memory data, the data length of the second data, the third data, and the first check code to a second device.

With reference to the third aspect, in some implementations of the third aspect, the data length of the first memory data is greater than or equal to the data length of the second data.

With reference to the third aspect, in some implementations of the third aspect, the first memory data includes second memory data and the first data, and the processing unit is further configured to determine that a data length of the second memory data is less than a threshold.

With reference to the third aspect, in some implementations of the third aspect, the transceiver unit is further configured to send a pre-encryption command to the second device, where the pre-encryption command indicates the second device to perform a pre-encryption procedure, and the pre-encryption command includes the first array and the data length of the second memory data.

With reference to the third aspect, in some implementations of the third aspect, the transceiver unit is further configured to receive first indication information from the second device, where the first indication information indicates whether the second device completes the pre-encryption procedure.

With reference to the third aspect, in some implementations of the third aspect, the transceiver unit is further configured to receive second indication information from the second device, where the second indication information indicates whether the second device correctly receives the second data.

According to a fourth aspect according to the invention, another communication apparatus is provided, and includes: a transceiver unit, configured to receive a pre-encryption command from a first device, where the pre-encryption command indicates a second device to perform a pre-encryption procedure, the pre-encryption command includes a first array and a data length of second memory data of the first device, and the first array includes at least one random number; and a processing unit, configured to determine first data based on the first array, where the first data belongs to third memory data, where the transceiver unit is further configured to send first indication information to the first device, where the first indication information indicates whether the second device completes the pre-encryption procedure.

With reference to the fourth aspect, in some implementations of the fourth aspect, the third memory data includes fourth memory data and the first data, and the processing unit is further configured to determine that a data length of the fourth memory data of the second device is the same as the data length of the second memory data.

With reference to the fourth aspect, in some implementations of the fourth aspect, the transceiver unit is further configured to receive a remaining data length of first memory data, a data length of second data, third data, and a first check code from the first device, where the second data is to-be-transmitted data, and the first check code is used to check whether the third data is correct; the processing unit is further configured to determine a second check code based on the remaining data length of the first memory data, the data length of the second data, and the third data; the processing unit is further configured to check the first check code and the second check code; and if the first check code is the same as the second check code, the processing unit is further configured to determine a relationship between a data length of the third memory data and the data length of the second memory data; or if the first check code is different from the second check code, the transceiver unit is further configured to feed back a check failure to the first device.

With reference to the fourth aspect, in some not claimed implementations of the fourth aspect, if a difference between the data length of the third memory data and the data length of the second memory data is the same as the data length of the second data, the processing unit is further configured to determine the second data based on an exclusive OR operation on the third memory data and the third data; or if a difference between the data length of the third memory data and the data length of the second memory data is different from the data length of the second data, the processing unit is further configured to re-perform the pre-encryption procedure.

With reference to the fourth aspect, in some not claimed implementations of the fourth aspect, the transceiver unit is further configured to send second indication information to the first device, where the second indication information indicates whether the second device correctly receives the second data.

According to a fifth aspect according to the invention, a computer-readable storage medium is provided, and stores instructions. When the instructions run on a computer, the computer is enabled to perform the communication method according to the second aspect and the possible implementations of the second aspect.

According to a sixth not claimed aspect, a computer program product is provided. When the computer program product runs on a computer, the computer is enabled to perform the method according to any one of the first aspect and the possible implementations of the first aspect.

According to a seventh aspect according to the invention, a computer program product is provided. When the computer program product runs on a computer, the computer is enabled to perform the method according to any one of the second.

According to an eighth aspect, a communication apparatus is provided, and includes a processor and a memory. The processor is coupled to the memory, the memory is configured to store a computer program, and the processor is configured to execute the computer program stored in the memory, so that the communication apparatus performs the communication method according to any one of the second aspect and the possible implementations of the second aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of interaction between a vehicle and an external recognition module according to this application;
FIG. 2 is a schematic flowchart of a data transmission method according to this application;
FIG. 3 is a schematic flowchart of another data transmission method according to this application;
FIG. 4 is a schematic block diagram of a communication apparatus according to this application; and
FIG. 5 is a schematic block diagram of another communication apparatus according to this application.

### DESCRIPTION OF EMBODIMENTS

The technical solutions in this application are described below with reference to the accompanying drawings.

New technologies such as facial recognition, fingerprint recognition, and Bluetooth have developed rapidly in the mobile communication field. However, development and application of the new technologies in the field of automotive electronics lag behind. Reasons are roughly as follows:

First, a vehicle is more valuable than a mobile device such as a mobile phone, and therefore the vehicle has a higher requirement for security.

Conventional technologies such as radio frequency communication have been developed in the field of automotive electronics for many years, and have been verified for many years. Therefore, the technologies are more mature and more reliable.

Second, most of modules are connected to the vehicle by using a controller area network (controller area network, CAN) bus, and all messages transmitted by using the CAN bus are broadcast and transmitted in a plaintext form. In this transmission form, data security between a recognition module and the vehicle cannot be effectively ensured. It can be proved through existing experiments that an attacker can access, through the CAN bus, an electronic control unit (electronic control unit, ECU) connected to the network.

If data transmitted by the recognition module such as a fingerprint recognition module on the CAN bus is illegally intercepted and read, an intruder may make a replay or forgery attack on the vehicle, and consequently property security of the vehicle is threatened.

Currently, there is an encryption method for an in-vehicle CAN bus. In the method, to-be-sent data is first padded, so that the data can be divided into several data blocks, a parity bit is added to an end, and then the data block is encrypted and sent by using an encryption algorithm in an advanced encryption standard (advanced encryption standard, AES). A receiver uses the parity bit to ensure integrity of the data, performs extraction based on a time identifier and a sequence identifier, and then performs splicing and decryption. However, in this method, there is a lack of a response to a replay attack and identity verification of a data sender, and real-time transmission of information cannot be ensured.

In view of the foregoing problem, this application provides a data transmission method and a communication apparatus. The method and the apparatus are applicable to encryption of communication data on an in-vehicle CAN bus. After a recognition module such as a digital biometric information recognition module is connected to a vehicle, the recognition module needs to perform encrypted communication of key data with an original in-vehicle control unit through a CAN bus. Therefore, in this application, data can be quickly and effectively encrypted, security performance of CAN bus communication can be improved, anti-theft performance of an entire vehicle can be enhanced, and a high real-time transmission requirement of the vehicle can be further met.

It should be noted that the data transmission method provided in this application is a communication security mechanism of a CAN bus based on a software system. The data transmission method is applicable to different in-vehicle ECUs, can meet a real-time information transmission requirement and a related limitation of CAN bus communication, and can implement effective security protection for the in-vehicle ECU at low costs.

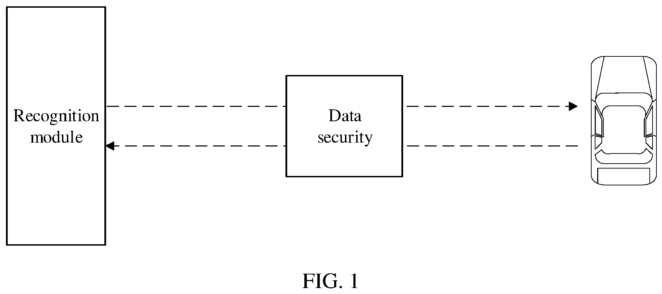

FIG. 1 is a schematic diagram of interaction between a vehicle and a recognition module according to this application.

It should be understood that in the schematic diagram of interaction shown in FIG. 1, security of data transmitted between the recognition module and the vehicle needs to be ensured to some extent, to ensure that the vehicle is not attacked by an attacker and is not stolen.

It should be understood that in the schematic diagram of interaction shown in FIG. 1, the recognition module may be a facial recognition module, a fingerprint recognition module, or a Bluetooth module, or may be another module that has a recognition function or a similar recognition function, or relates to CAN bus communication security, or the like. This is not specifically limited in this application.

Uniform descriptions of some concepts or steps related to the technical solutions in this application are provided below. Details are not described in the following descriptions.

It should be understood that an AES is a block encryption standard, is used to replace an original data encryption standard (data encryption standard, DES), and has been widely adopted and used in the world. The AES has become one of most popular algorithms in symmetric key encryption.

It should be understood that a random number generator means that a random number generation algorithm authenticated by the State Cryptography Administration is used, and a physical random number is used as a seed to ensure randomness.

It should be understood that an extension algorithm means that a random number is extended to data with a specified length by using a linear shift register recommended in an AES standard, and then the data is stored, to ensure randomness and uniqueness of the data.

It should be understood that a data pre-encryption method means that extended data is encrypted by using an AES advanced encryption algorithm, to obtain a pre-encryption result, and the pre-encryption result is stored in a memory.

It should be understood that an exclusive OR encryption procedure is a one-step procedure that is performed before data sending and that is of performing an exclusive OR operation on pre-encrypted data and data that needs to be sent.

It should be understood that a check code is generated through longitudinal redundancy check, check, cyclic redundancy check, and/or the like.

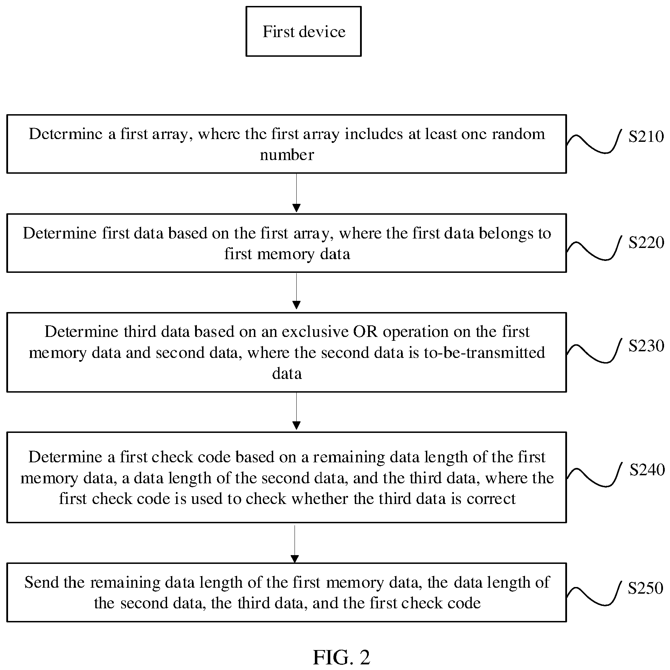

A data transmission method provided in this application is described below with reference to FIG. 2. Details are shown in FIG. 2.

It should be understood that in the data transmission method shown in FIG. 2, the method is performed by a transmit end, namely, a first device. Alternatively, the transmit end may be understood as a data sender controller, or may be a recognition module. This is not specifically limited in this application.

S210: Determine a first array, where the first array includes at least one random number.

S220: Determine first data based on the first array, where the first data belongs to first memory data of the first device.

It should be understood that, that the first device determines first data based on the first array specifically includes the following process: The first device extends the first array. For an extension algorithm, refer to the foregoing descriptions. Details are not described herein. Then, the first device encrypts an extended first array, determines the first data, and stores the first data in a memory. For an encryption algorithm, refer to the foregoing descriptions. Details are not described herein.

It should be understood that the first data belongs to the first memory data of the first device. The first memory data may be understood as an organic component of original or initial memory data stored before the first device extends and encrypts the first array or memory data existing before a moment (moment at which a pre-encryption procedure is started) and the first data obtained after the first array is extended and encrypted.

It should be understood that the first memory data may further include another component other than the initial or original memory data and the first data. This is not specifically limited in this application.

S230: Determine third data based on an exclusive OR operation on the first memory data and second data, where the second data is to-be-transmitted data.

It should be understood that the first device determines the third data based on the exclusive OR operation on the first memory data and the second data. The first device sequentially reads data bits that are in the first memory data and that have a length the same as a data length of the second data, and then performs a bitwise exclusive OR operation on the data bits that are in the first memory data and that have a length the same as the data length of the second data and the second data, to determine the third data. The second data is to-be-transmitted data received by the first device, and the third data is encrypted data, namely, data that needs to be transmitted by the first device to the second device, of the second data, or is ciphertext (cipher).

S240: Determine a first check code based on a remaining data length of the first memory data, the data length of the second data, and the third data, where the first check code is used to check whether the third data is correct.

It should be understood that the first device determines the first check code based on the remaining data length of the first memory data, the data length of the second data, and the third data. The first check code indicates whether the third data is correct or whether the third data is tampered with or interfered with.

The remaining data length of the first memory data may be understood as follows: The first device sequentially reads data bits that are in the first memory data and that have a length the same as the length of the second data, to perform an exclusive OR operation on the data bits and the second data. After the exclusive OR operation ends, there is some remaining data in the first memory data. In this case, the first device generates or determines the first check code based on the some remaining data in the first memory data, the data length of the second data, and the third data, to determine whether the third data is correct.

In this application, the remaining data length of the first memory data is used as a counter, and a check code is used to verify a data transmission process. With reference to an encryption mechanism, attacks such as a replay attack and a forgery attack in CAN bus communication can be effectively resisted, and security of key data transmission can be improved.

S250: Send the remaining data length of the first memory data, the data length of the second data, the third data, and the first check code to a second device.

It should be understood that the remaining data length of the first memory data, the data length of the second data, a data length of second memory data, or the like may be understood as indication information, and the indication information indicates data length information of the first memory data, the second data, the second memory data, or the like. In other words, the data length of the first memory data or the data length of the second data may be understood as a value, and the value indicates the remaining data length of the first memory data or the data length of the second data. For example, the remaining data length of the first memory data may be a value, for example, 8, and the value indicates that after the exclusive OR operation is performed, the remaining data length of the first memory data is 8 bits. Uniform descriptions are provided herein. Details are not described in the following descriptions.

In a possible implementation, before the first device determines the first array, the first device may further detect the data length of the second memory data of the first device in an idle time period of the first device, and may further determine that the data length of the second memory data is less than a threshold.

Specifically, when the first device determines that the data length of the second memory data is less than the threshold, the first device enables a pre-encryption algorithm or starts a pre-encryption procedure, that is, determines the first array, and determines the first data based on the first array.

It should be understood that the second memory data may be understood as the initial or original memory data that is described above and that exists before the first device determines the first array or the memory data that is described above and that exists before the moment (moment at which the pre-encryption procedure is started).

According to the technical solution, in this application, when the data length of the second memory data of the first device is less than a specific threshold, the first device can immediately supplement the data length of the memory data of the first device, so that sufficient data can be pre-encrypted, to meet a real-time data transmission requirement.

In a possible implementation, before the first device determines the third data based on the exclusive OR operation on the first memory data and the second data, the first device needs to determine that the data length of the first memory data is greater than or equal to the data length of the second data. Alternatively, the data length of the first memory data is greater than or equal to the data length of the second data.

That the first device determines that the data length of the first memory data is greater than or equal to the data length of the second data includes the following two cases:

Case #A: After receiving the second data, the first device directly determines that the data length of the first memory data is greater than or equal to the data length of the second data, and the first device may directly perform an encrypted transmission process of communication data.

Case #B: After receiving the second data, when the first device determines that the data length of the first memory data obtained by performing the pre-encryption procedure is less than the data length of the second data, the first device re-performs the pre-encryption procedure, to obtain a new length of the first memory data, so that the length of the first memory data is greater than or equal to the data length of the second data, and then performs encrypted transmission of communication data.

According to the technical solution, in this application, before exclusive OR encryption is performed on the first memory data and the second data, it can be ensured that the data length of the first memory data is greater than the data length of the second data. In this way, anti-theft performance of a vehicle can be enhanced, data security between the vehicle and a recognition module can be enhanced, and data communication efficiency can be further enhanced.

In a possible implementation, after the first device determines the first array, the first device may further send a pre-encryption command to the second device. The pre-encryption command indicates the second device to perform a pre-encryption procedure, and the pre-encryption command includes the first array and the data length of the second memory data of the first device.

Specifically, if the first device determines that the second memory data is abnormal, the pre-encryption command may further include a first length. The first length indicates a maximum length of data that can be stored in a memory of the first device or the second device.

In a possible implementation, the first length may be predefined or preset.

In this case, a value of the data length of the second memory data included in the pre-encryption command is -1, and a specific meaning of -1 may be understood as that the second memory data is abnormal.

Further, specifically, after determining the first array, the first device clears the second memory data, and the first device extends the first array to the maximum length indicated by the first length.

Alternatively, if the first device determines that the second memory data is normal, the first device normally performs the pre-encryption procedure, that is, determines the first array, and determines the first data based on the first array.

In this case, the pre-encryption command may further include a second length. The second length indicates a data length of the first data, or indicates a data length of an array obtained after the first array is extended.

In a possible implementation, the second length may be predefined or preset.

According to the technical solution, in this application, the first device and the second device can simultaneously start pre-encryption procedures. In this way, the first device and the second device can keep synchronous in the encryption procedure, to enhance communication security and data security between the first device and the second device.

In a possible implementation, the first device may further receive first indication information from the second device. The first indication information indicates that the second device completes the pre-encryption procedure.

Alternatively, the first indication information may indicate that the second device fails to correctly complete the pre-encryption procedure. In this case, the first device re-performs the foregoing step or method.

According to the technical solution, in this application, the second device can send, to the first device, indication information indicating that the pre-encryption procedure is completed, so that communication efficiency between the first device and the second device can be enhanced, to help the first device perform a subsequent procedure or method, and further enhance communication security between the first device and the second device.

In a possible implementation, the first device may further receive second indication information from the second device. The second indication information indicates that the second device correctly receives the second data.

Alternatively, the second indication information may indicate that the second device fails to correctly receive the second data. In this case, the first device re-performs the foregoing step or method.

According to the technical solution, in this application, the second device can send, to the first device, indication information indicating that plaintext is correctly received, to enhance communication efficiency between the first device and the second device.

It should be noted that in this embodiment of this application, the first memory data and the second memory data indicate memory data stored in the first device before and after pre-encryption. For example, if the first memory data obtained by the first device after pre-encryption is started is the second memory data before a next pre-encryption procedure is started, the first device obtains new first memory data after the next pre-encryption procedure is started.

According to the technical solution, in this application, a two-step encryption procedure in which pre-encryption and exclusive OR operation encryption are combined is used, so that an exclusive OR encryption procedure can be independent of a data generation procedure (a pre-encryption procedure). In this way, in an idle time period, sufficient data can be pre-encrypted and stored in the first device for use, so that exclusive OR encryption is performed by using unique data each time a transmission task is executed. Security of this data encryption method is the same as that of direct encryption. In addition, there is only the exclusive OR operation in a transmission procedure in the method, and therefore data can be quickly encrypted and sent to ensure real-time data transmission.

According to the technical solution, in this application, data can be quickly and effectively encrypted, security performance of CAN bus communication can be improved, the anti-theft performance of the entire vehicle can be enhanced, and a high real-time transmission requirement of the vehicle can be further met.

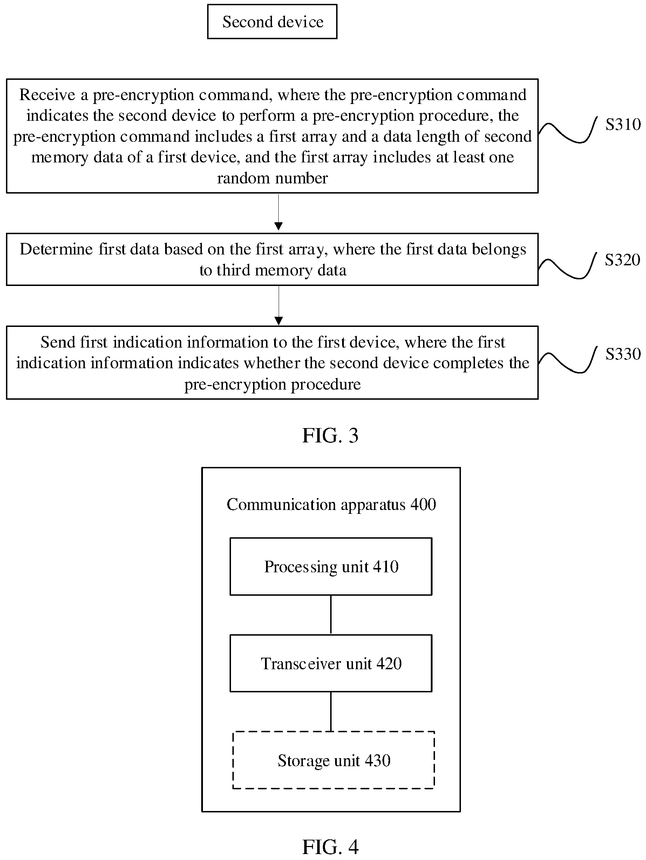

Another data transmission method provided in this application is described below with reference to FIG. 3. Details are shown in FIG. 3.

It should be understood that in the data transmission method shown in FIG. 3, the method is performed by a receive end, namely, a second device. Alternatively, the receive end may be understood as a data receiver controller. This is not specifically limited in this application.

S310: Receive a pre-encryption command, where the pre-encryption command indicates a second device to perform a pre-encryption procedure, the pre-encryption command includes a first array and a data length of second memory data of a first device, and the first array includes at least one random number.

S320: Determine first data based on the first array, where the first data belongs to third memory data.

S330: Send first indication information, where the first indication information indicates whether the second device completes the pre-encryption procedure.

It should be understood that, that the second device determines first data based on the first array specifically includes the following process: The second device extends the first array. For an extension algorithm, refer to the foregoing descriptions. Details are not described herein. Then, the second device encrypts an extended first array, determines the first data, and stores the first data in a memory. For an encryption algorithm, refer to the foregoing descriptions. Details are not described herein.

It should be understood that the first data belongs to the third memory data. The third memory data may be understood as an organic component of original or initial memory data stored before the second device extends and encrypts the first array or memory data existing before a moment (moment at which a pre-encryption procedure is performed) and the first data obtained after the first array is extended and encrypted.

It should be understood that the third memory data may further include another component other than the initial or original memory data and the first data. This is not specifically limited in this application.

In this invention, before the second device determines the first data based on the first array, the second device determines that a data length of fourth memory data of the second device is the same as the data length of the second memory data. This specifically includes the following three cases:
Case #C: If the second device determines that the data length of the fourth memory data is the same as the data length of the second memory data, the pre-encryption command sent by the first device to the second device may further carry a second length, and the second length indicates a threshold of a length of the first data obtained after the second device extends the first array. In this case, the second device extends the first array to a specified length based on the second length, then encrypts the extended first array by invoking an AES-128 algorithm, and stores an encryption result in the memory, so that the memory data can be supplemented to the specified length.
Case #D: If the second device determines that the data length of the second memory data carried in the pre-encryption command is -1, the second device clears the fourth memory data of the second device, so that the data length of the fourth memory data is consistent with the data length of the second memory data. The pre-encryption command may further include a first length, and the first length indicates a maximum threshold of memory data in the first device or the second device. In this case, the second device extends the first array to a specified length based on information carried in the pre-encryption command, then encrypts the extended first array by invoking an AES-128 algorithm, and stores an encryption result in the memory, so that the memory data can be supplemented to the specified length, for example, the first length.
Case #E: If the second device determines that data length information of the second memory data included in the pre-encryption command belongs to neither of the foregoing cases, the second device feeds back an error code to the first device, that is, indicates that there is a mismatch for the memory data. After receiving the feedback, the first device can restart the foregoing procedure.

According to the technical solution, in this application, it can be ensured that pre-encryption procedures respectively started by the first device and the second device are correct. In addition, an objective of data check can be further achieved, and a capability of resisting a replay attack can be enhanced, to enhance anti-theft performance of a vehicle.

It should be understood that an algorithm or a function used in a process such as a process in which the first device extends or encrypts the first array is consistent with an algorithm or a function used in a process such as a process in which the second device extends or encrypts the first array. In this way, the anti-theft performance of the vehicle can be enhanced, and communication security, that is, data security, between a recognition module and the vehicle can be enhanced.

It should be understood that in this embodiment of this application, the fourth memory data may be memory data stored before the second device receives the pre-encryption command, or may be understood as original or initial memory data.

It should be understood that in this embodiment of this application, the third memory data is new memory data obtained by storing an obtained encryption result (the first data) in the memory after the second device receives the pre-encryption command and extends and encrypts the first array. In other words, this may be understood as obtaining the third memory data, and the third memory data may be understood as including the fourth memory data and the first data.

In a possible implementation, the second device further receives a remaining data length of first memory data, a data length of second data, third data, and a first check code from the first device.

Specifically, after the second device receives the data, the second device first checks the received data. A specific process is as follows: The second device determines a second check code based on the remaining data length of the first memory data, the data length of the second data, and the third data, and checks the first check code and the second check code.

If the first check code is consistent with the second check code, the second device further compares a relationship between a data length of the third memory data of the second device and the data length of the second memory data of the first device. For example, if the data length of the third memory data is greater than the data length of the second memory data, the second device determines whether a difference between the data length of the third memory data and the data length of the second memory data is consistent with the data length of the second data. If the difference between the data length of the third memory data and the data length of the second memory data is consistent with the data length of the second data, the second device sequentially reads data bits that have a length the same as a data length of the third data from the third memory data, and performs a bitwise exclusive OR operation on the data bits and the third data, to obtain the second data or to obtain plaintext. If the difference between the data length of the third memory data and the data length of the second memory data is inconsistent with the data length of the second data, the second device feeds back an error code mismatch to the first device, returns an error, and re-executes the pre-encryption command, that is, re-performs the pre-encryption procedure.

If the first check code is inconsistent with the second check code, the second device returns a data check failure to the first device, and ignores the data.

According to the technical solution, in this application, after receiving the remaining data length of the first memory data, the data length of the second data, and the third data that are sent by the first device, the second device can determine the second check code based on the data, to check whether the data received by the second device is tampered with or interfered with. Therefore, communication security and data security between the first device and the second device can be enhanced, and an identity of the first device can be verified, to enhance the anti-theft performance of the vehicle.

In a possible implementation, the second device may further send second indication information to the first device. The second indication information indicates that the second device correctly receives the second data.

Alternatively, the second indication information may indicate that the second device fails to correctly receive the second data.

According to the technical solution, in this application, the second device can send, to the first device, indication information indicating that plaintext is correctly received, to enhance communication efficiency between the first device and the second device.

In a possible implementation, the first device performs a corresponding operation based on the error code fed back by the second device, and if there is a mismatch for the memory data, clears the current memory data, and re-executes the pre-encryption command; or if the data is abnormal, re-executes a data transmission command.

It should be noted that in this embodiment of this application, the third memory data and the fourth memory data indicate memory data stored in the second device before and after pre-encryption. For example, if the third memory data obtained by the second device after pre-encryption is started is the fourth memory data before a next pre-encryption procedure is started, the second device obtains new third memory data after the next pre-encryption procedure is started.

According to the technical solution, in this application, a two-step encryption procedure in which pre-encryption and exclusive OR operation encryption are combined is used, so that an exclusive OR encryption procedure can be independent of a data generation procedure (a pre-encryption procedure). In this way, in an idle time period, sufficient data can be pre-encrypted and stored in the first device for use, so that exclusive OR encryption is performed by using unique data each time a transmission task is executed. Security of this data encryption method is the same as that of direct encryption. In addition, there is only the exclusive OR operation in a transmission procedure in the method, and therefore data can be quickly encrypted and sent to ensure real-time data transmission.

According to the technical solution, in this application, data can be quickly and effectively encrypted, security performance of CAN bus communication can be improved, the anti-theft performance of the entire vehicle can be enhanced, and a high real-time transmission requirement of the vehicle can be further met.

It should be noted that the data transmission method provided in this application can be implemented based on a software system, and security protection for communication data on a CAN bus is implemented by adding a corresponding software program to an in-vehicle ECU. This has advantages of low costs, strong adaptability, and no dependence on a hardware device.

It should be noted that this application is designed based on an AES-128 encryption algorithm provided in an international universal advanced encryption algorithm standard, the algorithm is efficient and simple, and an encryption security level is high.

It should be noted that compared with another encryption manner, a two-step encryption procedure of pre-encryption and bitwise exclusive OR encryption is used in this application, so that an encryption procedure and a data generation procedure in the method are independent. When a controller detects an idle time period, sufficient data may be pre-encrypted and stored in the controller for use. Each time a transmission task is executed, exclusive OR encryption is performed by using unique data. Security of this data encryption method is the same as that of direct encryption. In addition, there is only the exclusive OR operation in a transmission procedure in the method, and therefore data can be quickly encrypted and sent to ensure real-time data transmission.

It should be noted that in this application, a remaining data length in a memory is used as a counter, and a check code is used to verify a data transmission process. With reference to an encryption mechanism, attacks such as a replay attack and a forgery attack in CAN bus communication can be effectively resisted, and security of key data transmission can be improved.

It should be noted that in this application, an exactly same function is used in an encryption procedure and a decryption procedure, and no additional decryption algorithm is required, and therefore memory occupation of the controller is reduced.

It should be noted that a random number extension algorithm used in this application is designed based on a linear feedback shift register, to ensure randomness and uniqueness of extended data. Data with a length of n≤2m bits can be obtained through extension by using a random number with a length of m bits. This can ensure that there is sufficient available data in the memory.

It should be noted that this application is based on the AES-128 algorithm, and it can be implemented that the algorithm is efficient and simple, and an encryption security level is high. Under a limitation of CAN bus communication, fast and stable operation is performed, encryption and decryption functions are exactly the same, and no additional decryption algorithm is required, and therefore memory occupation of the controller is reduced. In addition, in this application, a data encryption algorithm can be executed before data that needs to be encrypted arrives, and data encryption and decryption can be implemented by using a bitwise exclusive OR operation. This improves efficiency of data encryption.

It should be noted that the data transmission method provided in this application is widely applicable to in-vehicle controllers, for example, an electronic door system, an electronic ignition control system, a facial recognition device, and a fingerprint recognition device. This is not specifically limited in this application.

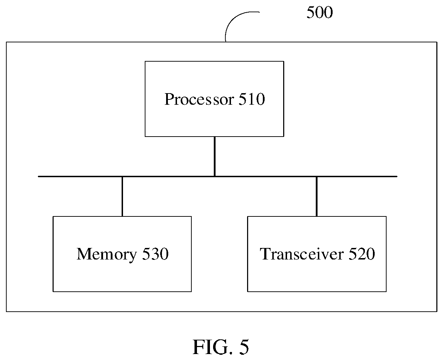

A communication apparatus provided in this application is described below with reference to FIG. 4 and FIG. 5.

It should be understood that both the first device and the second device in the foregoing method embodiments are used as two parts or modules of a vehicle, one of the two parts or modules is used as a transmit end or a sending module, and the other is used as a receive end or a receiving module.

FIG. 4 is a schematic block diagram of a communication apparatus 400 according to this application. As shown in the figure, the communication apparatus 400 may include a transceiver unit 410 and a processing unit 420.

In a possible design, the communication apparatus 400 may be the first device in the foregoing method embodiments, or may be a chip configured to implement a function of the first device in the foregoing method embodiments.

It should be understood that the communication apparatus 400 may correspond to the first device in the method embodiments of this application, and the communication apparatus 400 may include units configured to perform the method performed by the first device in the foregoing method embodiments.

It should be understood that the units in the communication apparatus 400 and the foregoing other operations and/or functions are respectively used to implement the corresponding procedures in the foregoing figures.

It should be understood that a specific process in which the units perform the foregoing corresponding steps is described in detail in the foregoing method embodiments. For brevity, details are not described herein.

In an example for description, the communication apparatus 400 can implement the actions, steps, or methods related to the first device in S201, S202, and S203 in the foregoing method embodiments.

It should be understood that the foregoing content is merely used an example for understanding. The communication apparatus 400 can further implement other steps, actions, or methods related to the first device in the foregoing method embodiments. Details are not described herein.

It should be understood that the communication apparatus 400 may correspond to the second device in the method embodiments of this application, and the communication apparatus 400 may include units configured to perform the method performed by the second device in the foregoing method embodiments.

In addition, the units in the communication apparatus 400 and the foregoing other operations and/or functions are respectively used to implement the corresponding procedures in the foregoing method embodiments.

It should be understood that a specific process in which the units perform the foregoing corresponding steps is described in detail in the foregoing method embodiments. For brevity, details are not described herein.

In an example for description, the communication apparatus 400 can implement the actions, steps, or methods related to the second device in S301 and S302 in the foregoing method embodiments, and can further implement the actions, steps, or methods related to the second device in the foregoing method embodiments.

It should be understood that the foregoing content is merely used an example for understanding. The communication apparatus 400 can further implement other steps, actions, or methods related to the second device in the foregoing method embodiments. Details are not described herein.

Optionally, the communication apparatus 400 further includes a storage unit 430. The storage unit 430 is configured to store instructions.

FIG. 5 is a schematic block diagram of a communication device 500 according to an embodiment of this application. As shown in the figure, the communication device 500 includes at least one processor 510 and a transceiver 520.

The processor 510 is coupled to a memory, and is configured to execute instructions stored in the memory, to control the transceiver 520 to send a signal and/or receive a signal.

Optionally, the communication device 500 further includes a memory 530, configured to store instructions.

It should be understood that the processor 510 and the memory 530 may be integrated into one processing apparatus. The processor 510 is configured to execute program code stored in the memory 530, to implement the foregoing functions.

During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine).

The transceiver 520 may further include an antenna. There may be one or more antennas. The transceiver 520 may be a communication interface or an interface circuit.

When the communication device 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

In an implementation process, the steps of the foregoing methods may be completed by using an integrated logic circuit of hardware in the processor, or by using instructions in a form of software.

The steps of the methods disclosed with reference to embodiments of this application may be directly performed and completed by a hardware processor, or may be performed and completed by using a combination of hardware in the processor and a software module.

The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps of the foregoing methods in combination with the hardware in the processor. To avoid repetition, details are not described herein.

An embodiment of this application further provides a computer-readable storage medium. The computer-readable storage medium stores computer instructions used to implement the method performed by the first device in the foregoing method embodiments.

For example, when the computer instructions are executed by a computer, the computer is enabled to implement the method performed by the first device in the foregoing method embodiments.

An embodiment of this application further provides a computer-readable storage medium. The computer-readable storage medium stores computer instructions used to implement the method performed by the second device in the foregoing method embodiments.

For example, when the computer instructions are executed by a computer, the computer is enabled to implement the method performed by the second device in the foregoing method embodiments.

An embodiment of this application further provides a computer program product including instructions. When the instructions are executed by a computer, the computer is enabled to implement the method performed by the first device or the second device in the foregoing method embodiments.

It may be clearly understood by a person skilled in the art that for convenient and brief description, for explanations and beneficial effects of related content in any communication apparatus provided above, refer to the corresponding method embodiment provided above. Details are not described herein.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by the first device or the second device, or may be a functional module that is in the first device or the second device and that can invoke and execute the program.

Aspects or features of this application may be implemented as a method, an apparatus, or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device, such as a server or a data center, into which one or more usable media are integrated.

The usable medium (or the computer-readable medium) may include, for example, but is not limited to various media that can store program code, for example, a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card and a flash storage device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may indicate one or more devices and/or other machine-readable media configured to store information. The term "machine-readable media" may include but is not limited to a radio channel, and various other media that can store, include, and/or carry instructions and/or data.

It may be understood that the memory in embodiments of this application may be a volatile memory or a nonvolatile memory, or may include a volatile memory and a nonvolatile memory.

The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache.

By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification includes but is not limited to these memories and any memory of another proper type.

In the several embodiments provided in this application, it should be understood that the disclosed apparatus and method may be implemented in other manners.

For example, the described apparatus embodiment is merely an example. For example, division into the units is merely logical function division, and in actual implementation, another division manner may be used. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located at one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When the foregoing embodiments are implemented by using software, all or some of the foregoing embodiments may be implemented in a form of a computer program product. The computer program product includes one or more computer instructions.

When the computer program instructions are loaded and executed on a computer, all or some of the procedures or functions according to embodiments of this application are generated. The computer may be a general-purpose computer, a dedicated computer, a computer network, or other programmable apparatuses.

For example, the computer may be a personal computer, a server, or a network device. The computer instructions may be stored in a computer-readable storage medium, or may be transmitted from a computer-readable storage medium to another computer-readable storage medium.

For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. For the computer-readable storage medium, refer to the foregoing descriptions.

It should be understood that in embodiments of this application, the numbers "first", "second", and the like are merely used to distinguish between different objects, for example, to distinguish between different devices, and constitute no limitation on the scope of embodiments of this application. Embodiments of this application are not limited thereto.

It should be further understood that in this application, both "when" and "if" mean that a device performs corresponding processing in an objective situation, constitute no limitation on time, do not require a determining action during implementation of the device, and do not mean that there is another limitation.

It should be further understood that in embodiments of this application, "B corresponding to A" indicates that B is associated with A, and B may be determined based on A. However, it should be further understood that determining B based on A does not mean that B is determined based only on A, and B may alternatively be determined based on A and/or other information.

It should be further understood that the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

The terms "part", "module", "system", and the like used in this specification are used to represent computer-related entities, hardware, firmware, combinations of hardware and software, software, or software being executed. For example, a part may be but is not limited to a process that runs on a processor, a processor, an object, an executable file, an execution thread, a program, and/or a computer. As illustrated by using figures, both a computing device and an application that runs on the computing device may be parts. One or more parts may reside within a process and/or an execution thread, and a part may be located on one computer and/or distributed between two or more computers.

In addition, these parts may be executed from various computer-readable media that store various data structures. For example, the parts may communicate by using a local and/or remote process and based on, for example, a signal having one or more data packets (for example, data from two parts interacting with another part in a local system, a distributed system, and/or across a network such as the Internet interacting with other systems by using the signal).

A person of ordinary skill in the art may be aware that the example units, algorithms, and steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division, and in actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located at one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving (S310), by a second device, a pre-encryption command from a first device, wherein the pre-encryption command indicates the second device to perform a pre-encryption procedure, the pre-encryption command comprises a first array and a data length of second memory data of the first device, and the first array comprises at least one random number;
determining (S320), by the second device, first data based on the first array, wherein the first data belongs to third memory data and wherein the first data is obtained after the first array is extended and encrypted; and
sending (S330), by the second device, first indication information to the first device, wherein the first indication information indicates whether the second device completes the pre-encryption procedure,
wherein the third memory data comprises fourth memory data and the first data, and before the determining, by the second device, first data based on the first array, the method further comprises:
determining, by the second device, that a data length of the fourth memory data is the same as the data length of the second memory data,
wherein the first device and the second device are used as two parts or modules of a vehicle, the one of the two parts or modules used as a transmit end being the first device or a sending module, and the other is used as a receive end, wherein the first device is used as the transmit end and the second device is used as the receive end.

2. The method according to claim 1, wherein the method further comprises:
receiving, by the second device, a remaining data length of first memory data, a data length of second data, third data, and a first check code from the first device, wherein the second data is to-be-transmitted data, and the first check code is used to check whether the third data is correct;
determining, by the second device, a second check code based on the remaining data length of the first memory data, the data length of the second data, and the third data;
checking, by the second device, the first check code and the second check code; and
if the first check code is the same as the second check code, determining, by the second device, a relationship between a data length of the third memory data and the data length of the second memory data; or
if the first check code is different from the second check code, feeding back, by the second device, a check failure to the first device.

3. A communication apparatus (400) corresponding to a second device and comprising:
a transceiver unit (410), configured to receive (S310) a pre-encryption command from a first device, wherein the pre-encryption command indicates the second device to perform a pre-encryption procedure, the pre-encryption command comprises a first array and a data length of second memory data of the first device, and the first array comprises at least one random number; and
a processing unit (420), configured to determine (S320) first data based on the first array, wherein the first data belongs to third memory data and wherein the first data is obtained after the first array is extended and encrypted, wherein
the transceiver unit (410) is further configured to send (S330) first indication information to the first device, wherein the first indication information indicates whether the second device completes the pre-encryption procedure,
wherein the third memory data comprises fourth memory data and the first data, and the processing unit (420) is further configured to:
determine that a data length of the fourth memory data is the same as the data length of the second memory data,
wherein the first device and the second device are used as two parts or modules of a vehicle, the one of the two parts or modules used as a transmit end being the first device or a sending module, and the other is used as a receive end, wherein the first device is used as the transmit end and the second device is used as the receive end.

4. The apparatus according to claim 3, wherein
the transceiver unit (410) is further configured to receive a remaining data length of first memory data, a data length of second data, third data, and a first check code from the first device, wherein the second data is to-be-transmitted data, and the first check code is used to check whether the third data is correct;
the processing unit (420) is further configured to determine a second check code based on the remaining data length of the first memory data, the data length of the second data, and the third data;
the processing unit (420) is further configured to check the first check code and the second check code; and
if the first check code is the same as the second check code, the processing unit (420) is further configured to determine a relationship between a data length of the third memory data and the data length of the second memory data; or
if the first check code is different from the second check code, the transceiver unit (410) is further configured to feed back a check failure to the first device.

5. A computer-readable storage medium that stores instructions, wherein when the instructions run on a computer,
the computer is enabled to perform the data transmission method according to any one of claims 1 to 2.

6. A computer program product, wherein when the computer program product runs on a computer, the computer is enabled to perform the method according to any one of claims 1 to 2.

## Patentansprüche

1. Datenübertragungsverfahren, das umfasst:
Empfangen (S310), durch ein zweites Gerät, eines Vorverschlüsselungsbefehls von einem ersten Gerät, wobei der Vorverschlüsselungsbefehl dem zweiten Gerät angibt, eine Vorverschlüsselungsprozedur durchzuführen, der Vorverschlüsselungsbefehl ein erstes Array und eine Datenlänge zweiter Speicherdaten des ersten Geräts umfasst und das erste Array zumindest eine Zufallszahl umfasst;
Bestimmen (S320), durch das zweite Gerät, von ersten Daten basierend auf dem ersten Array, wobei die ersten Daten zu dritten Speicherdaten gehören und wobei die ersten Daten erhalten werden, nachdem das erste Array erweitert und verschlüsselt wurde; und
Senden (S330), durch das zweite Gerät, von ersten Angabeinformationen an das erste Gerät, wobei die ersten Angabeinformationen angeben, ob das zweite Gerät die Vorverschlüsselungsprozedur abschließt,
wobei die dritten Speicherdaten vierte Speicherdaten und die ersten Daten umfassen und vor dem Bestimmen, durch das zweite Gerät, von ersten Daten basierend auf dem ersten Array, das Verfahren ferner umfasst:
Bestimmen, durch das zweite Gerät, dass eine Datenlänge der vierten Speicherdaten gleich der Datenlänge der zweiten Speicherdaten ist,
wobei das erste Gerät und das zweite Gerät als zwei Teile oder Module eines Fahrzeugs verwendet werden, der eine der zwei Teile oder Module als eine Übertragungsseite verwendet wird, die das erste Gerät oder ein Sendemodul ist, und der andere als eine Empfangsseite verwendet wird, wobei das erste Gerät als die Übertragungsseite verwendet wird und das zweite Gerät als die Empfangsseite verwendet wird.

2. Verfahren nach Anspruch 1, wobei das Verfahren ferner umfasst:
Empfangen, durch das zweite Gerät, einer Restdatenlänge erster Speicherdaten, einer Datenlänge zweiter Daten, dritter Daten und eines ersten Prüfcodes vom ersten Gerät, wobei die zweiten Daten zu übertragende Daten sind und der erste Prüfcode zum Prüfen, ob die dritten Daten korrekt sind, verwendet wird;
Bestimmen, durch das zweite Gerät, eines zweiten Prüfcodes basierend auf der Restdatenlänge der ersten Speicherdaten, der Datenlänge der zweiten Daten und der dritten Daten;
Prüfen, durch das zweite Gerät, des ersten Prüfcodes und des zweiten Prüfcodes und wenn der erste Prüfcode gleich dem zweiten Prüfcode ist, Bestimmen, durch das zweite Gerät, einer Beziehung zwischen einer Datenlänge der dritten Speicherdaten und der Datenlänge der zweiten Speicherdaten oder
wenn der erste Prüfcode vom zweiten Prüfcode verschieden ist, Zurückleiten, durch das zweite Gerät, eines Prüffehlers an das erste Gerät.

3. Kommunikationsvorrichtung (400), die einem zweiten Gerät entspricht und umfasst:
eine Transceiver-Einheit (410), die zum Empfangen (S310) eines Vorverschlüsselungsbefehls von einem ersten Gerät, wobei der Vorverschlüsselungsbefehl dem zweiten Gerät angibt, eine Vorverschlüsselungsprozedur durchzuführen, der Vorverschlüsselungsbefehl ein erstes Array und eine Datenlänge zweiter Speicherdaten des ersten Geräts umfasst und das erste Array zumindest eine Zufallszahl umfasst, ausgelegt ist; und
eine Verarbeitungseinheit (420), die zum Bestimmen (S320) von ersten Daten basierend auf dem ersten Array, wobei die ersten Daten zu dritten Speicherdaten gehören und wobei die ersten Daten erhalten werden, nachdem das erste Array erweitert und verschlüsselt wurde, ausgelegt ist, wobei
die Transceiver-Einheit (410) ferner zum Senden (S330) von ersten Angabeinformationen an das erste Gerät, wobei die ersten Angabeinformationen angeben, ob das zweite Gerät die Vorverschlüsselungsprozedur abschließt, ausgelegt ist,
wobei die dritten Speicherdaten vierte Speicherdaten und die ersten Daten umfassen und die Verarbeitungseinheit (420) ferner ausgelegt ist zum:
Bestimmen, dass eine Datenlänge der vierten Speicherdaten gleich der Datenlänge der zweiten Speicherdaten ist,
wobei das erste Gerät und das zweite Gerät als zwei Teile oder Module eines Fahrzeugs verwendet werden, der eine der zwei Teile oder Module als eine Übertragungsseite verwendet wird, die das erste Gerät oder ein Sendemodul ist, und der andere als eine Empfangsseite verwendet wird, wobei das erste Gerät als die Übertragungsseite verwendet wird und das zweite Gerät als die Empfangsseite verwendet wird.

4. Vorrichtung nach Anspruch 3, wobei
die Transceiver-Einheit (410) ferner zum Empfangen einer Restdatenlänge erster Speicherdaten, einer Datenlänge zweiter Daten, dritter Daten und eines ersten Prüfcodes vom ersten Gerät, wobei die zweiten Daten zu übertragende Daten sind und der erste Prüfcode zum Prüfen, ob die dritten Daten korrekt sind, verwendet wird, ausgelegt ist;
die Verarbeitungseinheit (420) ferner zum Bestimmen eines zweiten Prüfcodes basierend auf der Restdatenlänge der ersten Speicherdaten, der Datenlänge der zweiten Daten und der dritten Daten ausgelegt ist;
die Verarbeitungseinheit (420) ferner zum Prüfen des ersten Prüfcodes und des zweiten Prüfcodes ausgelegt ist und
wenn der erste Prüfcode gleich dem zweiten Prüfcode ist, die Verarbeitungseinheit (420) ferner zum Bestimmen einer Beziehung zwischen einer Datenlänge der dritten Speicherdaten und der Datenlänge der zweiten Speicherdaten ausgelegt ist; oder wenn der erste Prüfcode vom zweiten Prüfcode verschieden ist, die Transceiver-Einheit (410) ferner zum Zurückleiten eines Prüffehlers an das erste Gerät ausgelegt ist.

5. Computerlesbares Speichermedium, das Anweisungen speichert, wobei, wenn die Anweisungen auf einem Computer ausgeführt werden,
der Computer zum Durchführen des Datenübertragungsverfahrens nach einem der Ansprüche 1 bis 2 befähigt wird.

6. Computerprogrammprodukt, wobei, wenn das Computerprogrammprodukt auf einem Computer ausgeführt wird, der Computer zum Durchführen des Verfahrens nach einem der Ansprüche 1 bis 2 befähigt wird.

## Revendications

1. Procédé de transmission de données, comprenant :
la réception (S310), par un deuxième dispositif, d'une commande de pré-chiffrement en provenance d'un premier dispositif, la commande de pré-chiffrement indiquant au deuxième dispositif d'exécuter une procédure de pré-chiffrement, la commande de pré-chiffrement comprenant un premier tableau et une longueur de données de deuxièmes données de mémoire du premier dispositif, et le premier tableau comprenant au moins un nombre aléatoire ;
la détermination (S320), par le deuxième dispositif, de premières données sur la base du premier tableau, les premières données appartenant à des troisièmes données de mémoire et les premières données étant obtenues après l'extension et le chiffrement du premier tableau ; et
l'envoi (S330), par le deuxième dispositif, de premières informations d'indication au premier dispositif, les premières informations d'indication indiquant si le deuxième dispositif a terminé ou non la procédure de pré-chiffrement,
les troisièmes données de mémoire comprenant des quatrièmes données de mémoire et les premières données, et avant la détermination, par le deuxième dispositif, de premières données sur la base du premier tableau, le procédé comprenant en outre :
la détermination, par le deuxième dispositif, du fait qu'une longueur de données des quatrièmes données de mémoire est identique à la longueur de données des deuxièmes données de mémoire,
le premier dispositif et le deuxième dispositif étant utilisés sous la forme de deux parties ou modules d'un véhicule, l'un ou l'une des deux parties ou modules utilisé(e) en tant qu'extrémité de transmission étant le premier dispositif ou un module d'envoi, et l'autre étant utilisé en tant qu'extrémité de réception, le premier dispositif étant utilisé en tant qu'extrémité de transmission et le deuxième dispositif étant utilisé en tant qu'extrémité de réception.

2. Procédé selon la revendication 1, lequel procédé comprend en outre :
la réception, par le deuxième dispositif, d'une longueur de données restante de premières données de mémoire, d'une longueur de données de deuxièmes données, de troisièmes données et d'un premier code de vérification en provenance du premier dispositif, les deuxièmes données étant des données à transmettre, et le premier code de vérification étant utilisé pour vérifier si les troisièmes données sont correctes ;
la détermination, par le deuxième dispositif, d'un deuxième code de vérification sur la base de la longueur de données restante des premières données de mémoire, de la longueur de données des deuxièmes données et des troisièmes données ;
la vérification, par le deuxième dispositif, du premier code de vérification et du deuxième code de vérification ; et
si le premier code de vérification est identique au deuxième code de vérification, la détermination, par le deuxième dispositif, d'une relation entre une longueur de données des troisièmes données de mémoire et la longueur de données des deuxièmes données de mémoire ; ou
si le premier code de vérification est différent du deuxième code de vérification, le renvoi, par le deuxième dispositif, d'un échec de vérification au premier dispositif.

3. Appareil de communication (400) correspondant à un deuxième dispositif et comprenant :
une unité émettrice-réceptrice (410), configurée pour recevoir (S310) une commande de pré-chiffrement en provenance d'un premier dispositif, la commande de pré-chiffrement indiquant au deuxième dispositif d'exécuter une procédure de pré-chiffrement, la commande de pré-chiffrement comprenant un premier tableau et une longueur de données de deuxièmes données de mémoire du premier dispositif, et le premier tableau comprenant au moins un nombre aléatoire ; et
une unité de traitement (420), configurée pour déterminer (S320) de premières données sur la base du premier tableau, les premières données appartenant à des troisièmes données de mémoire et les premières données étant obtenues après l'extension et le chiffrement du premier tableau,
l'unité émettrice-réceptrice (410) étant en outre configurée pour envoyer (S330) de premières informations d'indication au premier dispositif, les premières informations d'indication indiquant si le deuxième dispositif a terminé ou non la procédure de pré-chiffrement,
les troisièmes données de mémoire comprenant des quatrièmes données de mémoire et les premières données, et l'unité de traitement (420) étant en outre configurée pour :
déterminer qu'une longueur de données des quatrièmes données de mémoire est identique à la longueur de données des deuxièmes données de mémoire,
le premier dispositif et le deuxième dispositif étant utilisés sous la forme de deux parties ou modules d'un véhicule, l'un ou l'une des deux parties ou modules utilisé(e) en tant qu'extrémité de transmission étant le premier dispositif ou un module d'envoi, et l'autre étant utilisé en tant qu'extrémité de réception, le premier dispositif étant utilisé en tant qu'extrémité de transmission et le deuxième dispositif étant utilisé en tant qu'extrémité de réception.

4. Appareil selon la revendication 3, dans lequel
l'unité émettrice-réceptrice (410) est en outre configurée pour recevoir une longueur de données restante de premières données de mémoire, une longueur de données de deuxièmes données, de troisièmes données et un premier code de vérification en provenance du premier dispositif, les deuxièmes données étant des données à transmettre, et le premier code de vérification étant utilisé pour vérifier si les troisièmes données sont correctes ;
l'unité de traitement (420) est en outre configurée pour déterminer un deuxième code de vérification sur la base de la longueur de données restante des premières données de mémoire, de la longueur de données des deuxièmes données et des troisièmes données ;
l'unité de traitement (420) est en outre configurée pour vérifier le premier code de vérification et le deuxième code de vérification ; et
si le premier code de vérification est identique au deuxième code de vérification, l'unité de traitement (420) est en outre configurée pour déterminer une relation entre une longueur de données des troisièmes données de mémoire et la longueur de données des deuxièmes données de mémoire ; ou
si le premier code de vérification est différent du deuxième code de vérification, l'unité émettrice-réceptrice (410) est en outre configurée pour renvoyer un échec de vérification au premier dispositif.

5. Support de stockage lisible par ordinateur qui stocke des instructions, dans lequel, lorsque les instructions sont exécutées sur un ordinateur,
l'ordinateur est activé pour exécuter le procédé de transmission de données selon l'une quelconque des revendications 1 à 2.

6. Produit de programme informatique, dans lequel, lorsque le produit de programme informatique est exécuté sur un ordinateur, l'ordinateur est activé pour exécuter le procédé selon l'une quelconque des revendications 1 à 2.
